# EUROPEAN PATENT APPLICATION

(11) **EP 1 826 967 A1**
(43) Date of publication of application: **29.08.2007**
(21) Application number: 06110261.2
(22) Date of filing: 22.02.2006
(51) Int. Cl.: H04L 12/64

(54) **Communication system and method for speech impaired person**

(71) Applicant: Audiotex Nederland B.V., 3088 EA Rotterdam (NL)
(72) Inventor: Bakker, Theodorus Alfonsus, 2855 AC, Vlist (NL)
(74) Representative: van Westenbrugge, Andries

(57) **Abstract**

Communication platform system and method for establishing a communication link between a call initiator terminal (1) and a conversation partner terminal (4). The platform system (10) comprises first interface circuitry (11) for establishing an audio link between the call initiator terminal (1), the platform system (10) and the conversation partner terminal (4), and second interface circuitry (12) for establishing a data link between the platform system (10) and the call initiator terminal (1) for receiving text input data. The platform system (10) is arranged to convert the received text input data to an audio fragment, and to play the audio fragment on the audio link, while maintaining the audio link between the call initiator terminal (1) and the conversation partner terminal (4).

## Description

### Field of the invention

The present invention relates to a communication platform system for establishing a communication link between a call initiator terminal and a conversation partner terminal, or in a further aspect, to a method for establishing a communication link between a call initiator terminal and a conversation partner terminal.

### Prior art

People with a speech disability, such as stuttering or mutism (disability to speak), cannot use normal telephone conversations to communicate with other people. Text messaging via telephone, or chatting or e-mailing using a computer is in such cases a usual alternative. Such methods have disadvantages such as lower availability than telephone infrastructure, necessity for different hardware for both communicating parties, etc.

### Summary of the invention

The present invention seeks to provide a method and system which would allow speech impaired persons to use telephony in a user friendly manner, as normal as possible, and with as little additional hardware requirements as possible.

According to the present invention, a communication platform system according to the preamble defined above is provided, in which the platform system comprises first interface circuitry for establishing an audio link between the call initiator terminal, the platform system and the conversation partner terminal, and second interface circuitry for establishing a data link between the platform system and the call initiator terminal for receiving text input data, in which the platform system is arranged to convert the received text input data to an audio fragment, and to play the audio fragment on the audio link. When playing the audio fragment, the audio link between the call initiator terminal and conversation partner terminal is maintained. Such a platform system allows the speech impaired person to initiate a normal telephone call to anyone desired at any moment desired.

In a further embodiment, the call initiator terminal comprises a computer system with a keyboard for providing the text input data. Nowadays, such a computer system or personal computer is available in many families, and may readily be used for application of the present invention. The call initiator terminal further comprises a telephone set with which the audio link to the conversation partner terminal is made, and allows to hear the audio from the conversation partner, and the audio fragment generated by the platform system.

In an exemplary embodiment, the audio link comprises a multiparty (e.g. circuit switched) connection in a telecommunication network, such as the public switched telephony network (PSTN). A clear advantage in this embodiment is that the multiparty connection allows easy mixing of audio, i.e. the audio from the conversation partner and from the generated audio fragment.

Alternatively, the audio link between the call initiator terminal and platform system comprises a voice over internet protocol (VoIP) connection, and e.g. a PSTN connection between the platform system and the conversation partner terminal. Existing and readily available software may e.g. be used on the computer system of the call initiator platform for this purpose. Also, in a further embodiment, the audio link between the conversation partner terminal and the platform system also comprises a voice over internet protocol (VoIP) connection. In this embodiment, no use is made of a public switched telephony network. Existing computers, provided with speakers and a microphone, or other suitable equipment for VoIP communication may be used.

The data link is, in a further embodiment, established using an internet protocol (IP) network, such as the well known Internet or world wide web. In this embodiment, readily available and widely used hardware may be used for the second interface circuitry and the call initiator terminal.

In a further embodiment, the platform system is arranged to set up the audio link. In this manner, it is possible to have the platform system play a central role in the communication arrangement, which may be advantageous for the service provider, e.g. with regard to billing for this service.

The platform system may be arranged to provide support to the call initiator terminal using the data link, e.g. in the phase of call initiation and during the conversation, e.g. by providing a text library from which the call initiator may select preset phrases and the like. Such support may e.g. be provided in the form of an interactive web page hosted on the platform system.

In a further aspect, the present invention relates to a method as defined above, comprising establishing an audio link between the call initiator terminal and the conversation partner terminal, establishing a data link with the call initiator terminal for receiving text input data, converting the received text input data to an audio fragment, and playing the audio fragment on the audio link. In this manner, both the call initiator and the conversation partner can hear the synthesized voice of the generated audio fragment.

The audio link is established after receiving call initiation data from the call initiator terminal via the data link in a further embodiment, e.g. the telephone number of the conversation partner terminal. Alternatively, the audio link is established after receiving call initiation data from the call initiator terminal via the audio link. E.g. a charged telephone number and a pass word may be provided on a web page of the service provider, after which the call initiator has to call that number and enter the password. In that manner, the existing data link (for browsing the relevant web page) is associated automatically with the telephone set number used for initiating the call.

In a further embodiment, the audio link at least partly comprises a telecommunication network (PSTN) circuit switched connection. Alternatively, or in combination, the audio link at least partly comprises a voice over internet protocol (VoIP) connection.

Text input data may be directly input by the call initiator, e.g. using a keyboard, or it may be provided using a library of preset phrases or phrase parts, e.g. presented on a (personalized) web page of the service.

In order to be able to listen back the conversation at a later time, the method in a further embodiment comprises logging of a conversation on the audio link.

In an even further aspect, the present invention relates to a computer program product comprising executable code, which when loaded and executed on a platform system according to an embodiment of the present invention, provides the platform system the functionality of one of the present methods. The computer program product, e.g. in the form of a software program, then actually embodies the features of the present invention.

### Short description of drawings

The present invention will be discussed in more detail below, using a number of exemplary embodiments, with reference to the attached drawings, in which
Fig. 1 shows a schematic view of a communication arrangement according to a first embodiment of the present invention;
Fig. 2 shows a schematic view of the conversion of text data into audio according to the present invention;
Fig. 3 shows a schematic view of a communication arrangement according to a second embodiment of the present invention, partly using VoIP connections; and
Fig. 4 shows a schematic view of a communication arrangement according to a third embodiment of the present invention, using only VoIP connections.

### Detailed description of exemplary embodiments

By means of this invention, people with some form of speech handicap (amongst which but not exclusive people with a form of 'mutism' and severe stutter handicaps) are offered a way to make a telephone conversation with whom, to where, on what ever moment they wish, and perhaps even more important, on their own initiative.

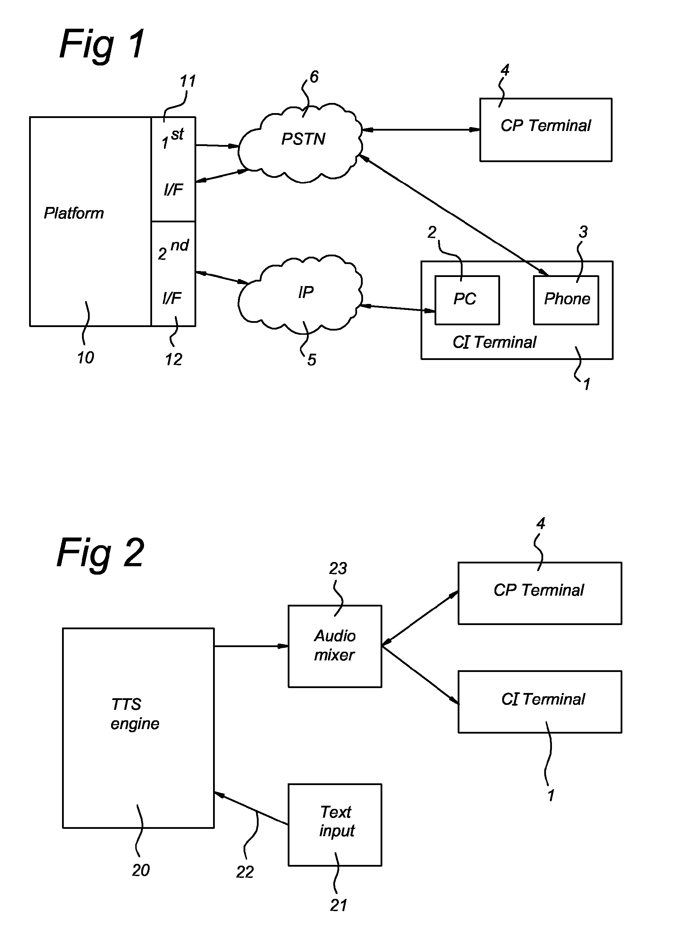

In Fig. 1 a schematic diagram is shown of a communication arrangement in which the present invention is implemented according to a first embodiment. A call initiator (CI) terminal 1 comprises a personal computer 2 or the like, and a telephone set 3. The telephone set 3 and a conversation partner (CP) terminal 4 (e.g.. also in the form of a normal telephone) are connected to a public switched telephone network (PSTN) 6, and when a call is established, an audio link is present between them, as indicated by the double arrow lines between PSTN 6 and call initiator terminal 1 and conversation partner terminal 4, respectively. Although a speech impaired person may use the telephone set 3 in a normal manner to listen to another person using the CP terminal 4, according to this embodiment, another possibility is provided to communicate interactively.

The personal computer or computer system 2 is connected to a computer network 5, in this example an internet protocol (IP) network such as the Internet. The personal computer 2 is a well known system for the skilled person, and comprises e.g. a keyboard (not shown) to input text. The personal computer 2 may also be implemented in the form of a dedicated processing device, which at least has the capability to input data (a keyboard of any kind) and to send the text data to the platform 10, e.g. in the form of a PDA or smart phone.

A communication platform system, or platform 10 comprises second interface circuitry 12 which allows the platform 10 to send and receive data (such as text input) from the personal computer 2 over the IP network 5. Furthermore, the platform 10 comprises first interface circuitry 11, which allows to connect to the PSTN 6 with an audio link. The platform 10 is arranged to set up a multi-party audio connection via the first interface circuitry 11 using the PSTN 6 between the CI terminal 1, CP terminal 4 and platform 10, as indicated by the double arrow line in Fig. 1 between first interface circuitry 11 and PSTN 6.

The personal computer 2 is arranged with e.g. a web browser to be able to log in on a web-page associated with the owner of the platform 10 (the platform 10 is e.g. arranged as a host computer of this web page). The person with the speech handicap (hereinafter indicated as call initiator) can identify himself to the platform 10. This platform 10 is e.g. a shared Interactive Media Response platform that is property of and maintained by a service provider. After having logged in, the call initiator indicates the person he wants to have a conversation with, by entering a number associated with the CP terminal 4. This number may be entered at that moment or selected from a predefined and maintained list. Next, the call initiator clicks on a 'make connection' button on the web-site and the platform 10 starts calling out to both the number of the CP terminal 4 and the number of the telephone set 3 of the CI terminal 1, in order to set up the multi-party connection.

As soon as the audio connection has been established between the CI terminal 1, CP terminal 4 and platform 10, the platform 10 sends out a short greeting message to the CP terminal 4, so that it is apparent that someone with a speech handicap is calling. Now the dialogue can commence, where the conversation partner can talk normally using CP terminal 4, heard by the call initiator using the telephone set 3. For this, the audio signal travels the (double arrow) audio links between conversation partner terminal 4, PSTN 6, and call initiator terminal 1. The call initiator can 'talk back' by typing in the text he wants to speak out or select a predefined text from a sort of library with text fragments using the personal computer 2. After having clicked on a 'speak this text' button, the text is sent to the platform 10 via the IP network 5, converted immediately to audio and send to the CP terminal 4 using an audio signal in the audio connection. This is indicated by the single arrow line between the first interface circuitry 11 of the platform system 10 and the PSTN 6. Because of the duplex character of audio links in telephony networks, the generated speech will be audible to both the conversation partner and the call initiator self. The dialogue will end, and the connections in the PSTN 6 and IP network 5 may be closed, when either party hangs up the phone.

The billing for this service may be done on a (bi-)monthly basis by means of an invoice or, depending on the chosen commercial model, by means of a 0900-number with a yet to be determined tariff for the user (i.e. the call initiator).

An important aspect of the present invention relates to the capability to convert text as entered via the web browser by a so called Text to Speech (TTS) engine 20 (speech synthesis) into an audio fragment. This is illustrated schematically in Fig. 2. The TTS engine 20 may e.g. be a dedicated hardware device being comprised in the platform 10, or a software program being executed on the platform 10. The text input data 21 (e.g. from personal computer 2) is received by TTS engine 20 via a data connection 22, e.g. comprising the IP network 5 and second interface 12 of the embodiment in Fig. 1. The TTS engine 20 is arranged to generate the audio fragment within a very short time (in the order of 100 msec) and to play this audio fragment to both parties (i.e. both the CP terminal 4 and the CI terminal 1). This may be accomplished by a mixing device 23 connected to the TTS engine 20, the CI terminal 1 and the CP terminal 4, being arranged to mix the generated audio signal with the duplex communication signals between CP terminal 4 and CI terminal 1. As indicated by the arrows in Fig. 2, it would suffice for the mixing device 23 to mix the audio signal from the TTS engine 20, and the audio signal originating from the CP terminal 4, and to make the mixed signal available to the CI terminal 1 and the CP terminal 4.

Because the telephone connection in the PSTN 6 (see embodiment of Fig. 1) is a normal duplex link in a multi-party connection, the mixing function of the mixing device 23 may be implemented effectively in the PSTN 6 as all three audio channels are being mixed in a multi-party circuit switched connection. Both the call initiator and the conversation partner are able to hear the audio generated by the TTS engine 20. This leaves implicitly open the possibility that on the side of the call initiator, multiple people might participate in the conversation (e.g. using a hands free set). The TTS engine 20 is constantly being fed by the text data that the call initiator enters and/or selects and thus becomes, if you will, a third member of the conversation.

Below a description follows of one of the ways how the present invention may be employed in practice, from initial subscription to the service until the possibility to look into on line billing information.

On a web site (e.g. hosted on the platform 10) a person interested in this service can subscribe by entering his full name and address information, complete with e-mail address. Via this e-mail address a confirmation of the subscription in the form of a contract in PDF format is sent to the user with the request to print this out himself, sign it and fax or send it by post to the service provider.

The person can also indicate if he wants to be able to connect to mobile, international and/or premium rate numbers as well. This because of the extra dial out costs that will have to be made in those cases. After the reception of the signed agreement (and possibly after a credibility check with respect to the 'good intentions' of this particular user) a user login id and password is generated the same day. This information may be generated by the platform 10, and is sent to the user by e-mail. The user now can use the service.

The user (the call initiator) logs in on the web site with the id and password that were sent to him after which he enters his personal environment. In this personal page he can enter both the telephone number of the conversation partner and of himself. Next, the call initiator clicks on the 'make connection' button . The platform 10 receives this command via the web site and first tries to set up a connection to the desired conversation partner (using CP terminal 4). If the conversation partner is 'engaged' or if nobody answers the phone or if something else is wrong, this is signalled to the call initiator via the web site by intervention of the platform 10. This event is also logged in a personal log file of the call initiator.

If the conversation partner does answer the phone within a certain time, than, after a short natural pause of two or three seconds (in which the conversation partner typically says his name) a message is spoken out (so initiated from the platform 10) with the purpose that the conversation partner understands that this is a call from the call initiator and that the conversation partner should wait for the establishing of the connection to the call initiator. The platform 10 now starts to dial out to the number of the call initiator himself. As soon as he answers, a signal appears on the web page, indicating that the conversation may now commence.

On the web site, the call initiator may now type the text he wants to have spoken out to the conversation partner and after that clicks on the 'speak this text' button. The platform 10 also receives this command via the web site and offers it to the TTS engine 20 for conversion to an audio file. This conversion process typically takes no longer than some tenths of a second. After the conversion, the generated audio fragment is being played to both sides of the connection, so both to the conversation partner and the call initiator. In this manner, the call initiator also can hear what he has typed in and what the conversation partner hears. The conversation partner of course, can speak back as if it were a 'normal' telephone conversation.

To avoid having to look up and enter phone numbers, a way to set up and maintain a personal telephone book will be offered (available within the subscription he purchased) to the call initiator. Of course also the (default) telephone number of the call initiator himself can be entered and altered (typically his fixed line number at home or his mobile number, both preferably with a 'hands free' option). This telephone number will appear as 'default' in the 'own number to be dialled' field, after having logged in. The telephone numbers from the list will have an associated name field as well, for easy selecting purposes.

There will be a list available with standard, universal messages, like for example:
- "Hello, how are you ?"
- "Well, I have to stop now; talk to you later !"
- "Can you pop by tonight ?"

Next to the list mentioned above, the subscriber might also set up and maintain a text library with more personal text fragments and / or applicable to the specific, personal situation of the call initiator himself. This could be text message as for example:
- "Shall we go to the cinema in Gouda tonight ?"
- "Dick and Brigitte are popping by this evening; would you like to come as well for a drink ?"
- "Thom and I are going shopping now and want to pay you a visit afterwards if that's convenient."
The call initiator can select text fragments from both lists causing them to be copied to the text field automatically. If desired, the user might edit the text and / or add something manually before pushing on the 'speak this text' button.

The call initiator can enter these text fragments `off line' (so even before the telephone connection with the conversation partner is established), thus allowing the actual (telephone) dialogue to flow much faster (i.e. 'more natural').

All conversation details are being logged by the platform 10, such as:
- date and time of the start of the conversation
- date and time of the end of the conversation
- the total duration of the call
- the telephone number of the conversation partner
- the used own number of the call initiator
- the total costs of the call / conversation

As an option for a later phase, a start / stop recording button might be added to allow voice logging.

After the ending of the call, the recording will be sent in WAV or MP3 format to the e-mail address of the call initiator. This might be handy for cases where a call is made to an official institute or when something is purchased over the phone.

In the embodiment described above with reference to Fig. 1, the call initiator initiates the call using a Web interface. In order to provide a means of payment for the service as provided, a different initiation embodiment may be used. An alternative commercial model is based on the calling to a premium rate 0900 number with which the call initiator implicitly pays for the usage of the service. The entire initial subscription procedure is not required in this case, as well as the login id the personal on line phone book and the personal on line text library.

The setting up and the actual making of the conversation in this model comprises the following steps: The call initiator surfs to the web site, clicks on the 'setting up a call-4-talc session' button and receives a code on the screen, together with a 0900 number (in combination with the applicable tariff of course). The call initiator then calls the listed 0900 number, is being welcomed by a short message, followed by a prompt to enter the code that is listed on the screen. In this manner, an association is being established between the personal computer 2 (keyboard) of the call initiator and the telephone connection that has to be set up. The system now asks to the call initiator (e.g. by means of an interactive voice response (IVR) dialogue) to enter the number of the conversation partner. This number is being spoken back for confirmation. After confirming the right number, the platform starts to dial out to the desired number of the conversation partner. From this point on, the conversation pursuits in the same way as described above.

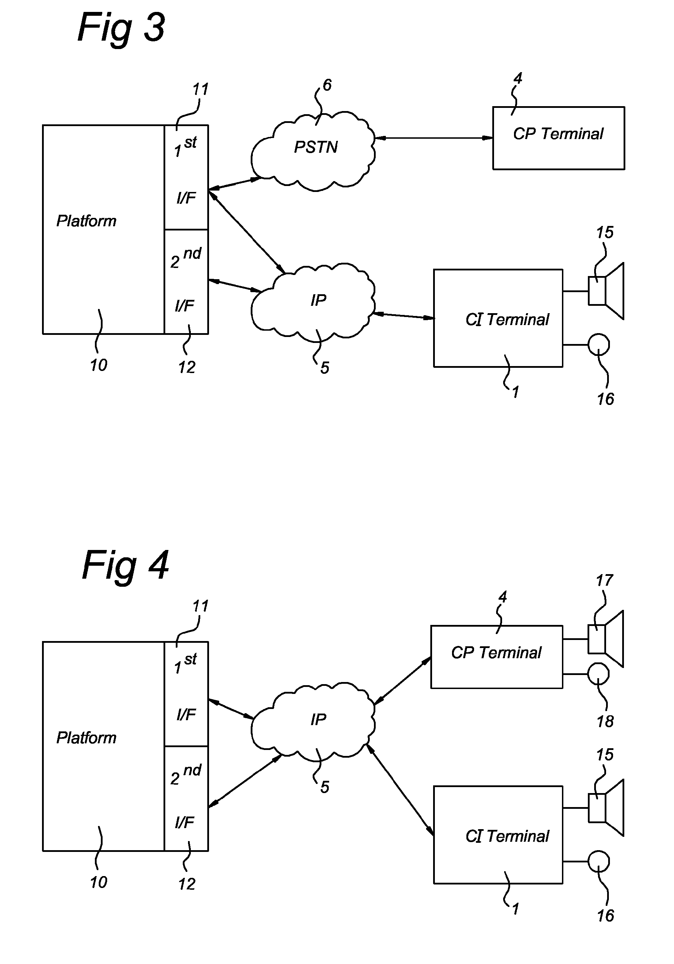

In Fig. 3, a further alternative for the embodiment of Fig. 1 is shown schematically. In this embodiment, use is made of the Voice over Internet Protocol (VoIP) for the audio connection between platform 10 and CI terminal 1. The CI terminal 1 may be equipped with speakers 15 and a microphone 16 to allow voice communication using VoIP. In this case, the first interface 11 is arranged to provide a VoIP connection with the CI terminal 1 via the IP network 5.

In an even further embodiment, shown schematically in Fig. 4, both parties, i.e. both the CI terminal 1 and the CP terminal 4, no longer are connected through the classical PSTN 6. The first interface 11 is in this case arranged to set up an audio channel to both parties via VoIP via the IP network 5, and no longer for setting up an audio connection using a PSTN 6. The CP terminal 4 may in this case be equipped with speakers 17 and a microphone 18, e.g. as part of a personal computer. In this case, the call initiator can hear what the conversation partner says through the speakers of his PC 2 and can talk back as described earlier via his keyboard and the conversion of the text to audio. The conversation partner can talk via the microphone 18 of his PC and hear what the call initiator has entered (the to audio converted text) via the speakers 17 of his PC.

The present invention may be embodied as a method, but also in the platform system 10. Furthermore, when a platform system as described above is available, comprising processing means and suitable memory, the invention may be embodied in a software program or computer program product comprising executable code. When the executable code is loaded onto the platform system 10, the platform system 10 is provided with functionality relating to the various embodiments as described above.

## Claims

1. Communication platform system for establishing a communication link between a call initiator terminal (1) and a conversation partner terminal (4),
in which the platform system (10) comprises first interface circuitry (11) for establishing an audio link between the call initiator terminal (1), the platform system (10) and the conversation partner terminal (4), and second interface circuitry (12) for establishing a data link between the platform system (10) and the call initiator terminal (1) for receiving text input data,
in which the platform system (10) is arranged to convert the received text input data to an audio fragment, and to play the audio fragment on the audio link.

2. Communication platform system according to claim 1, in which the call initiator terminal (1) comprises a computer system (2) with a keyboard for providing the text input data.

3. Communication platform system according to claim 2, in which the call initiator terminal (1) further comprises a telephone set (3).

4. Communication platform system according to claim 1, 2 or 3, in which the audio link comprises a multiparty connection in a telecommunication network (6).

5. Communication platform system according to claim 1, 2 or 3, in which the audio link between the call initiator terminal (1) and platform system (10) comprises a voice over internet protocol (VoIP) connection.

6. Communication platform system according to claim 1, 2, 3 or 5, in which the audio link between the conversation partner terminal (4) and the platform system (10) comprises a voice over internet protocol (VoIP) connection.

7. Communication platform system according to any one of claims 1 through 6, in which the data link is established using an internet protocol (IP) network (5).

8. Communication platform system according to any one of claims 1 through 7, in which the platform system (10) is arranged to set up the audio link.

9. Communication platform system according to any one of claims 1 through 8, in which the platform system (10) is arranged to provide support to the call initiator terminal (1) using the data link.

10. Method for establishing a communication link between a call initiator terminal (1) and a conversation partner terminal (4), comprising
establishing an audio link between the call initiator terminal (1) and the conversation partner terminal (4),
establishing a data link with the call initiator terminal (1) for receiving text input data, converting the received text input data to an audio fragment, and
playing the audio fragment on the audio link.

11. Method according to claim 10, in which the audio link is established after receiving call initiation data from the call initiator terminal (1) via the data link.

12. Method according to claim 10, in which the audio link is established after receiving call initiation data from the call initiator terminal (1) via the audio link.

13. Method according to claim 10, 11 or 12, in which the audio link at least partly comprises a telecommunication network (PSTN) (6) circuit switched connection.

14. Method according to claim 10, 11, or 12, in which the audio link at least partly comprises a voice over internet protocol (VoIP) connection.

15. Method according to any one of the claims 10 through 14, in which text input data is provided using a library of preset phrases or phrase parts.

16. Method according to any one of the claims 10 through 15, further comprising logging of a conversation on the audio link.

17. Computer program product comprising executable code, which when loaded and executed on a platform system (10) according to one of the claims 1 through 7, provides the platform system (10) the functionality of the method according to any one of claims 10 through 16.
